# EUROPÄISCHE PATENTSCHRIFT

(11) **EP 3 606 284 B1**
(45) Veröffentlichungstag und Bekanntmachung des Hinweises auf die Patenterteilung: **05.01.2022**
(21) Anmeldenummer: 19186440.4
(22) Anmeldetag: 16.07.2019
(51) Int. Cl.: H05B 6/06, H05B 6/12

(54) **VERFAHREN UND VORRICHTUNG ZUR INDUKTIVEN ENERGIEÜBERTRAGUNG**
METHOD AND DEVICE FOR INDUCTIVE ENERGY TRANSFER
PROCÉDÉ ET DISPOSITIF DE TRANSMISSION INDUCTIVE D'ÉNERGIE

(30) Priorität: 30.07.2018 DE 102018212680
(43) Veröffentlichungstag der Anmeldung: 05.02.2020
(73) Patentinhaber: E.G.O. Elektro-Gerätebau GmbH, 75038 Oberderdingen (DE)
(72) Erfinder: Egenter, Christian, 75015 Bretten (DE); Herweg, Elmar, 75038 Oberderdingen (DE); Wächter, Ulrich, 76646 Bruchsal (DE)
(74) Vertreter: Patentanwälte Ruff, Wilhelm, Beier, Dauster & Partner mbB

(56) Entgegenhaltungen:
- EP-A1- 2 916 432
- WO-A1-2018/070003
- KR-A- 20180 085 319

## Beschreibung

### ANWENDUNGSGEBIET UND STAND DER TECHNIK

Die Erfindung betrifft ein Verfahren zur induktiven Energieübertragung zwischen einer Übertragerspule und einer Empfängerspule sowie eine Vorrichtung, mit der dieses Verfahren durchgeführt werden kann.

Induktive Energieübertragung wird im Bereich der Technik immer wichtiger und ist beispielsweise aus der EP 2798911 B1 bekannt. Hier gibt es auch das WPC-Konsortium, das an einem herstellerübergreifenden Standard zur kabellosen Energieversorgung von Küchengeräten arbeitet. Dabei befindet sich auf der Übertragerseite ein Übertragerschwingkreis mit einer Übertragerspule und auf der Empfängerseite ein Empfängerschwingkreis mit einer Empfängerspule. Beide arbeiten vorteilhaft jeweils als induktiver Resonanzübertrager.

Aus der WO 2018/070003 A1 ist es bekannt, Energie kontaktfrei zu übertragen, und zwar induktiv mittels einer Induktionsspule. Dabei ist eine magnetische Abschirmplatte vorgesehen, die eine Kommunikationseinrichtung von der Spule abtrennt. So wird die Kommunikationseinrichtung von den starken Magnetfeldern der Spule geschützt.

Aus der KR 2018 0085319 A ist ein weiteres Verfahren zur induktiven Energieübertragung zwischen einer Übertragerspule und einer Empfängerspule bekannt, bei dem eine Induktionsspule samt Ansteuerung unter einem Tisch angeordnet ist. Auf dem Tisch kann damit entweder auf bekannte Art und Weise ein Kochgefäß induktiv beheizt werden, alternativ kann Energie zum Betrieb eines aufgestellten Mixers übertragen werden. Die Induktionsspule ist dabei an einem Spulenhalter aus Kunststoff derart angeordnet, dass darin vorgesehene sternförmig angeordnete Ferritstäbe unterhalb der Induktionsspule sind. So kann ein magnetischer Fluss nach unten in die sonstige Vorrichtung hinein verhindert werden.

Aus der EP 2 916 432 A1 ist es bekannt, in einem Gefäß, das auf eine Induktionskochstelle eines Induktionskochfelds aufgesetzt werden kann, eine induktiv betreibbare Heizung vorzusehen. Oberhalb einer Empfängerspule in dem Gefäß, die die Energie induktiv empfängt zum Betrieb der damit verbundenen Heizung, sind Ferritstäbe zur Abschirmung des Magnetfelds nach oben oberhalb der Empfängerspule vorgesehen.

### AUFGABE UND LÖSUNG

Der Erfindung liegt die Aufgabe zugrunde, ein eingangs genanntes Verfahren sowie eine zu dessen Durchführung geeignete Vorrichtung zu schaffen, mit denen Probleme des Standes der Technik gelöst werden können und es insbesondere möglich ist, eine induktive Energieübertragung möglichst gut zu erreichen, insbesondere auch bei Verwendung eines Induktionskochfelds als Vorrichtung zur Energieübertragung.

Gelöst wird diese Aufgabe durch ein Verfahren mit den Merkmalen des Anspruchs 1 sowie durch eine Vorrichtung mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für die Vorrichtung erläutert. Sie sollen jedoch unabhängig davon sowohl für das Verfahren als auch für die Vorrichtung selbständig und unabhängig voneinander gelten können.

Bei dem Verfahren werden eine Übertragerspule und eine Empfängerspule verwendet, um induktiv Energie zu übertragen. Vorteilhaft erfolgt dies mittels induktiver Resonanz-Übertrager. Die Übertragerspule ist Teil eines Übertrager-Schwingkreises, und die Empfängerspule ist Teil eines Empfänger-Schwingkreises. Beide Schwingkreise weisen bevorzugt noch entsprechend dimensionierte Kapazitäten bzw. Kondensatoren auf. Die Energie wird dabei induktiv von dem Übertrager-Schwingkreis zu dem Empfänger-Schwingkreis übertragen. Dies kann bevorzugt entsprechend dem vorgenannten beim WPC-Konsortium erarbeiteten Standard erfolgen, muss es aber nicht.

Das magnetische Feld in der Übertragerspule und/oder in der Empfängerspule wird von Ferriten geführt, wobei die Ferrite auf der jeweils von der Gegenspule abgewandten Seite angeordnet sind. Deren mögliche nähere Ausgestaltung wird nachfolgend noch im Detail erläutert. Des Weiteren sind an der Übertragerspule und/oder an der Empfängerspule an einer von der jeweiligen Gegenspule abgewandten Seite Metallteile angeordnet, vorteilhaft als flächig ausgebildete Metallteile. Dies können beispielsweise Tragevorrichtungen oder auch Schirmvorrichtungen für die jeweilige Spule sein. Bei der Verwendung eines Induktionskochfelds als erfindungsgemäße Vorrichtung kann dies vorzugsweise ein großflächiges Tragblech aus Aluminium sein, auf dem die mindestens eine Übertragerspule angeordnet ist. Es dient der mechanischen Halterung der Übertragerspule bzw. einer Induktionsheizspule sowie der Abschirmung von darunter angeordneten Bauteilen und Baugruppen gegen magnetische Felder.

Bei dem Verfahren wird der Strom durch die Übertragerspule überwacht. Er wird derart abgeregelt oder begrenzt, dass die Ferrite im Bereich einer einsetzenden Sättigung sind bzw. in den Ferriten induzierte magnetische Flüsse ein mögliches Maximum erreichen, aber nach Möglichkeit kein noch höherer Strom durch die Übertragerspule fließt. Dieses mögliche Maximum entspricht dann der Sättigung. Sättigung kann in der Übertrager- und/oder in der Empfängerspule eintreten. Eine sogenannte Sättigungsinduktion von Ferriten nimmt außerdem mit deren zunehmender Temperatur ab, sie ist also auch temperaturabhängig. Das bedeutet, dass die Sättigung in den Ferriten schneller bzw. bei geringeren Strömen auftritt je wärmer diese werden. Im kalten Zustand der Ferrite kann somit ein höherer Strom durch die Übertragerspule verwendet werden und damit mehr Energie übertragen. Dies gilt insbesondere, wenn ein Regler auf den Einsatzpunkt der Sättigung regelt. Der Strom durch die Übertragerspule wird dabei derart abgeregelt oder derart begrenzt, dass er maximal 5 % bis 10 % über demjenigen Sättigungsstrom liegt, bei dem in den Ferriten die genannte Sättigung eintritt. Der Strom durch die Übertragerspule kann also etwas größer sein, aber nicht viel, vorteilhaft eben nur 5 % bis 10 % größer sein. Besonders vorteilhaft wird der Strom durch die Übertragerspule sogar auf maximal 2 % über dem Sättigungsstrom begrenzt, so dass das Verfahren nahezu an der Sättigungsgrenze arbeitet.

Das Problem, das zur Entstehung der Erfindung geführt hat, besteht nämlich darin, dass dann, wenn die Ferrite gesättigt sind, ein Teil des Magnetfelds in die genannten benachbarten Metallteile eindringen kann und dort zum einen für eine ungewünschte Erwärmung sorgen kann. Zum anderen und hauptsächlich geht diese Energie natürlich der Energieübertragung verloren, so dass die Effizienz der Energieübertragung deutlich negativ beeinträchtigt wird. Schließlich ist es auch noch möglich, dass eine Leistungsversorgung der Übertragerspule durch zu hohe Ströme zu stark belastet oder möglicherweise sogar beschädigt wird.

In vorteilhafter Ausgestaltung der Erfindung ist die Übertragerspule bei Durchführen des Verfahrens mit einem Induktionskochfeld eine Induktionsheizspule des Induktionskochfelds. Besonders vorteilhaft wird das Verfahren nur mit einer einzigen Induktionsheizspule durchgeführt, wobei diese Induktionsheizspulen und insbesondere ihre Leistungsansteuerung speziell dafür ausgebildet sind.

Vorteilhaft kann vorgesehen sein, dass die Übertragerspule und der Übertrager-Schwingkreis unter einer Tischplatte angeordnet sind, die als übliche Tischplatte als Möbel in einem Haushalt dienen kann. Eine solche Tischplatte, vorteilhaft bestehend aus Holz, Stein oder anderen nichtmagnetischen und nicht-metallischen Materialien, kann eine Dicke von maximal 60 mm aufweisen. Vorteilhaft liegt eine Dicke im Bereich zwischen 5 mm und 20 mm oder sogar 40 mm. Selbst wenn hier eine Tischplatte vorgesehen ist, so ist die Vorrichtung im Sinne dieser Erfindung doch zumindest auch ein Kochfeld, da mit der Induktionsheizspule eben auch gekocht werden kann. Hierfür kann möglicherweise auf die Tischplatte eine separate Unterlage für ein Kochgefäß aufgelegt werden wegen Hitzeproblemen, was an sich aber kein Problem darstellt. Die genannte Tischplatte ersetzt dann eine sonstige Kochfeldplatte, die üblicherweise aus Glaskeramik besteht. Ein solches Induktionskochfeld mit einer Tischplatte und mindestens einer Induktionsheizspule darunter kann dann erheblich größer ausgebildet sein als ein übliches Induktionskochfeld. Die mindestens eine Induktionsheizspule kann auch beweglich darunter angeordnet sein, so dass sie an unterschiedliche Positionen gebracht werden kann. Wie dies im Detail zu realisieren ist, kennt der Fachmann aus dem Stand der Technik und braucht hier nicht näher erläutert zu werden.

In Ausgestaltung der Erfindung ist an der Übertragerspule an einer von der Empfängerspule abgewandten Seite ein flächiges Metallblech als vorgenanntes Metallteil angeordnet. Dieses flächige Metallblech weist eine Fläche auf, die mindestens 70 % der Fläche der Übertragerspule beträgt, vorteilhaft mindestens so groß ist wie diese Übertragerspule. Sie kann dazu dienen, der Übertragerspule Festigkeit zu verleihen und vor allem auch eine Abschirmung nach unten sicherzustellen. Ein Abstand zwischen dem Metallblech und der Übertragerspule kann maximal 50 mm betragen, vorteilhaft maximal 10 mm bis 20 mm. Dies ist auf Spulenwindungen der Übertragerspule bezogen. Das flächige Metallblech kann Durchbrüche und Öffnungen aufweisen, die ein Einrasten bzw. Fixieren von Übertragerspulen und Kabeldurchführungen oder eine Kühlung erlauben. Zur Schirmung wird vorzugsweise ein elektrisch gut leitfähiges Metall mit hohem Aluminium- oder Kupferanteil verwendet.

Bei einer vorgenannten Ausgestaltung der Erfindung mit einem flächigen Metallblech ist vorteilhaft vorgesehen, dass die Ferrite zwischen dem Metallblech und der Übertragerspule angeordnet sind. Ihre Dicke liegt üblicherweise im Bereich zwischen 4 mm und 10 mm, so dass auch die vorgenannte vorteilhafte Abstandsbedingung eingehalten werden kann.

Die genannten Ferrite sind vorteilhaft länglich und flach ausgebildet. Ihre Breite kann das Zweifache bis Zehnfache der Dicke betragen. Ihre Länge kann das Dreifache bis Zehnfache ihrer Breite betragen. Bevorzugt sind die Ferrite derart an der Übertragerspule angeordnet, dass sie in deren Mittelbereich weisen, insbesondere auf einen geometrischen Mittelpunkt. Es können zwischen zwei und zehn Ferrite vorgesehen sein. Vorteilhaft sind sie identisch ausgebildet, dies ist aber nicht zwingend.

Um ein Einsetzen der Sättigung der Ferrite zu erkennen, gibt es mehrere Möglichkeiten. In einer ersten grundsätzlichen Möglichkeit kann die erste Ableitung einer einhüllenden Kurve des Stroms durch die Übertragerspule berechnet werden oder ermittelt werden. Als einhüllende Kurve wird der Verlauf der positiven Spitzenwerte des Stroms durch die Übertragerspule verstanden. Dieser Verlauf kann beispielsweise durch einen gleitenden Spitzenwertdetektor ermittelt werden, so dass sowohl der Anstieg des Spitzenwerts bei steigender Netzspannung als auch die Abnahme des Spitzenwerts bei fallender Netzspannung beobachtet werden kann. Diese erste Ableitung wird durch zwei Tiefpässe geglättet, die unterschiedliche Zeitkonstanten aufweisen. Eine Zeitkonstante des zweiten Tiefpasses beträgt dabei das Fünffache bis Zwanzigfache einer Zeitkonstanten des ersten Tiefpasses, insbesondere etwa das Zehnfache. Bevorzugt kann vorgesehen sein, dass die Zeitkonstante des ersten Tiefpasses der 1,0-fachen bis fünffachen Periodendauer des Stroms durch die Übertragerspule entspricht. Besonders bevorzugt kann sie der zweifachen Periodendauer des Stroms durch die Übertragerspule entsprechen.

Hier ist es möglich, ein Einsetzen der Sättigung der Ferrite dann zu erkennen, wenn das Signal nach dem ersten Tiefpass der einhüllenden Kurve des Stroms durch die Übertragerspule für eine Dauer von mindestens 0,3 ms bei einer Schaltfrequenz zwischen 20 kHz und 60 kHz des Stroms durch die Übertragerspule nicht abfällt, wobei vorzugsweise nur ein Zeitfenster zwischen 2,5 ms und 5 ms nach dem Nulldurchgang der Netzspannung, zumeist 50 Hz oder 60 Hz, betrachtet wird. Innerhalb dieses Zeitfensters darf das Signal nach dem ersten Tiefpass also für eine bestimmte Dauer nicht abfallen. Besonders vorteilhaft sollte das Signal nach dem ersten Tiefpass in diesem Zeitfenster ansteigen, um dann sicher ein Einsetzen der Sättigung der Ferrite zu erkennen. Durch dieses Ermitteln eines Signalverlaufs nach zwei Tiefpässen wird der Rechenaufwand verringert.

Eine Sättigung der Ferrite tritt grundsätzlich bei großen Strömen auf, d.h. sie tritt vorzugsweise um das Maximum einer sinusförmigen Netzspannung auf. Bei 50Hz-Netzen liegt das Maximum bei 5,0ms nach dem Nulldurchgang, bei 60Hz-Netzen bereits bei 4,17msec. Bei einer idealen linearen Last fällt die erste Ableitung des Strom gemäß einer Kosinusfunktion von +1 bis -1 eines Maximalwertes, in der Realität kann sich ein vom Kosinus abweichendes Verhalten einstellen, bei dem dennoch die erste Ableitung kontinuierlich im Verlauf der Netzhalbwelle abnimmt. Den Bereich um die Nulldurchgänge nimmt man vorzugsweise aus der Analyse aus, da eine Sättigung zuerst bei hohen Spannungen auftritt, und Einregelvorgänge sowie Nichtlinearitäten bei kleinen Stromwerten auch eine Ursache für kurzzeitiges Ansteigen der ersten Ableitung sein können. So ergeben sich vorteilhaft die vorgenannten 2,5 ms.

Als zweite Möglichkeit in Abwandlung dieser ersten Möglichkeit kann vorgesehen sein, dass ein Einsetzen der Sättigung der Ferrite dann erkannt wird, wenn das Signal nach dem ersten Tiefpass das Signal nach dem zweiten Tiefpass durchbricht und mindestens 0,2 ms lang größer bleibt. Vorteilhaft bleibt das Signal nicht nur mindestens 0,2 ms lang größer, sondern sogar 0,5 ms lang. Dies bedeutet, dass sich die jeweiligen Verläufe der Signale nach dem ersten Tiefpass und nach dem zweiten Tiefpass im zeitlichen Bereich zwischen Nulldurchgang und Maximum der einhüllenden Kurve des Stroms durch die Übertragerspule schneiden, d.h. der fallende Trend der ersten Ableitung des Stroms hat sich umgekehrt, und somit wird das Einsetzen der Sättigung erkannt.

Als dritte grundsätzliche Möglichkeit kann nach dem Bilden der ersten Ableitung der einhüllenden Kurve des Stroms durch die Übertragerspule eine einsetzende Sättigung der Ferrite dann erkannt werden, wenn sich in einem Zeitfenster von 2,5 ms bis 5 ms nach einem Nulldurchgang der Netzspannung sich die mit einem Tiefpass geglättete erste Ableitung oder der gleitende Mittelwert der ersten Ableitung der einhüllenden Kurve des Stroms in etwa konstant oder steigend verhält. Dabei kann sie sich maximal um 10 % nach oben oder nach unten verändern, vorzugsweise um maximal 7 %. Der Wert der ersten Ableitung sollte während einer Zeitspanne von mindestens 0,3 ms, vorzugsweise von 0,5 ms bis 1 ms, nicht kleiner geworden sein, insbesondere kann ein Grenzwert eben bei einem Anstieg von 10 % oder 7 % liegen. Hier wird also eine einsetzende Sättigung dann erkannt, wenn sich in dem genannten Zeitfenster die erste Ableitung der einhüllenden Kurve quasi konstant oder nur leicht steigend verhält.

Hier kann in weiterer Ausgestaltung vorgesehen sein, dass auch die zweite Ableitung der einhüllenden Kurve des Stroms durch die Übertragerspule gebildet wird. Eine einsetzende Sättigung wird dann erkannt, wenn in dem genannten Zeitfenster zwischen 2,5 ms und 5 ms nach dem Nulldurchgang der einhüllenden Kurve des Stroms die zweite Ableitung mindestens 1,0 A/ms² beträgt. In diesem Fall wird also überwacht, wie stark die erste Ableitung sozusagen ansteigt.

Als vierte grundsätzliche Möglichkeit kann in einem vorausgehenden Schritt eine Referenzkurve für die einhüllende Kurve des Stroms durch die Übertragerspule aufgenommen werden. Dies kann dann erfolgen, wenn 50 % der maximal übertragbaren Energie übertragen werden, und zwar höchstens 50 % oder sogar genau 50 %. Es erfolgt jedenfalls in einem Zustand, in dem die Sättigung noch weit entfernt ist. Bei der anschließenden Überwachung des Stroms durch die Übertragerspule wird dessen einhüllende Kurve mit der Referenzkurve verglichen. Dabei werden vorteilhaft die beiden Kurvenverläufe normiert bzw. aufeinander abgestimmt für eine Vergleichbarkeit. Eine einsetzende Sättigung wird dann erkannt, wenn die einhüllende Kurve des Stroms durch die Übertragerspule mindestens 10 %, vorzugsweise mindestens 20 %, größer ist als die genannte Referenzkurve. Vorzugsweise wird die Sättigung dann erkannt, wenn die einhüllende Kurve mindestens 20 % größer wird als die Referenzkurve bzw. diese entsprechend übersteigt.

Als weitere Abwandlung ähnlich dieser zweiten Möglichkeit kann es vorgesehen sein, dass eine einsetzende Sättigung dann erkannt wird, wenn die erste Ableitung des Stroms durch die Übertragerspule in einem Zeitfenster zwischen einem Zehntel und einem Viertel der Periodendauer des Stroms durch die Übertragerspule während eines abfallenden Bereichs oder in einem abfallenden Bereich kurzzeitig erneut ansteigt. Dieser Anstieg erfolgt vorteilhaft für mindestens 1 µs und/oder um mindestens 10 % der Signalhöhe zu diesem Zeitpunkt. Unter Umständen kann der Anstieg auch nur mindestens 5 % sein.

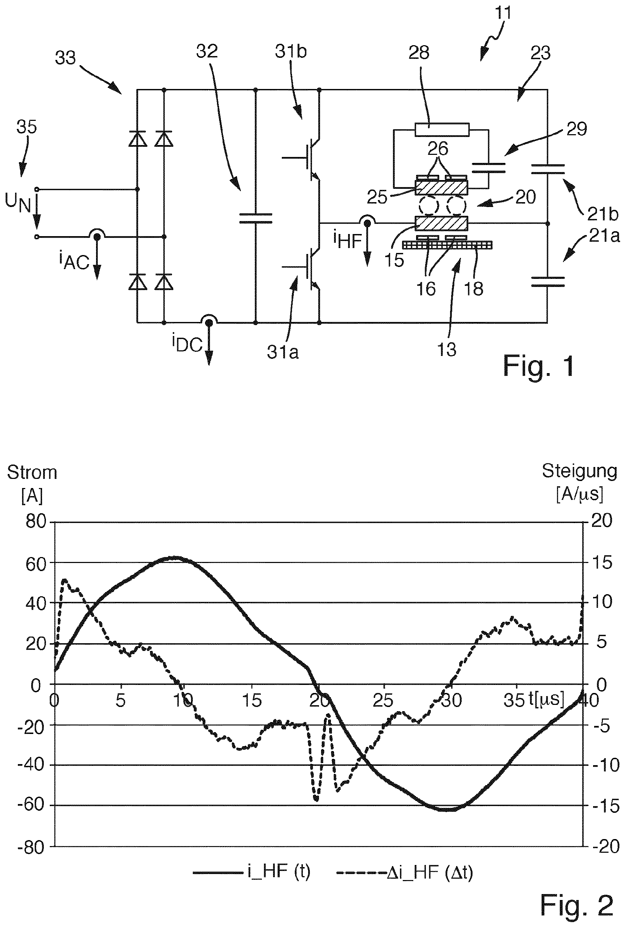

Alternativ zur Auswertung der Einhüllenden des Stroms durch die Übertragerspule können die gleichen Methoden auch auf die Auswertung der zugeführten Ströme im Zwischenkreis angewandt werden, siehe den Strom i_{DC} in Fig.1, oder netzseitig vor dem Gleichrichter, siehe dort den Strom i_{AC}.

Die Vorrichtung weist also neben der vorgenannten Übertragerspule bzw. dem Übertrager-Schwingkreis vor allem auch Mittel zum Überwachen bzw. Ermitteln des Stroms durch die Übertragerspule auf. Des Weiteren weist sie Mittel zum Ermitteln der ersten und ggf. auch der zweiten Ableitung dieses Stroms auf. Zusätzlich weist sie an der Übertragerspule die Ferrite auf und darunter ein Tragblech als Metallteil. Vorteilhaft ist die Vorrichtung ein Induktionskochfeld mit mehreren Induktionsheizspulen, von denen mindestens eine ausgebildet ist samt Ansteuerung, das vorgenannte Verfahren durchzuführen. Sie wird nachfolgend noch im Detail erläutert.

Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. Dabei zeigen:
- Fig. 1: eine erfindungsgemäße Vorrichtung als Induktionskochfeld zur Durchführung des Verfahrens,
- Fig. 2: der Verlauf eines Stroms durch die Übertragerspule und dessen abgeleitete Steigung im Netzspannungsmaximum,
- Fig. 3: der Verlauf der einhüllenden Kurve des Stroms durch die Übertragerspule während einer Netzhalbwelle mit Verläufen der ersten Ableitung und deren zweimaliger Glättung durch unterschiedliche Tiefpässe, wenn noch keine Sättigung in den Ferriten der Übertragerspule aufgetreten ist,
- Fig. 4 und 5: jeweils das Diagramm aus Fig. 3 mit einsetzender Sättigung und mit starker Sättigung,
- Fig. 6: eine Darstellung der einhüllenden Kurve des Übertragerstroms samt seiner ersten Ableitung nach der Zeit für verschiedene Sättigungsgrade und
- Fig. 7: eine Darstellung ähnlich Fig. 6 mit der Darstellung der jeweils zweiten Ableitung.

### DETAILLIERTE BESCHREIBUNG DER AUSFÜHRUNGSBEISPIELE

In der Fig. 1 ist eine erfindungsgemäße Vorrichtung 11 dargestellt, mit der das erfindungsgemäße Verfahren durchgeführt werden kann und anhand derer es im Folgenden beschrieben wird. Die Vorrichtung 11 ist vorteilhaft ein Induktionskochfeld, wie es beispielsweise auch aus der DE 10 2012 219 040 A1 hervorgeht. Die Vorrichtung 11 weist einen Übertrager-Schwingkreis 13, darauf befindet sich ein Empfänger-Schwingkreis 23, vorteilhaft auf eine nicht dargestellte Kochfeldplatte aufgestellt. Diese beiden sind über ein Magnetfeld 20 gekoppelt bzw. es erfolgt eine induktive Energieübertragung mittels induktiver Resonanz-Übertrager.

Der Übertrager-Schwingkreis 13 weist eine Übertragerspule 15 auf, welche hier eine Induktionsheizspule ist. Sie ist vorteilhaft aus HF-Spulenlitze in einer Ebene spiralig aufgewickelt. Unterhalb der Übertragerspule 15 sind Ferrite 16 angeordnet, und zwar in Stabform und in radialer Richtung verteilt. Es können sechs bis zehn Ferrite 16 sein. Sie sind vorteilhaft an der Unterseite der Übertragerspule 15 befestigt, beispielsweise angeklebt. Alternativ können sie in einer Kunststoffhalterung daran gehalten sein. Dies ist aus dem Stand der Technik bekannt für den Aufbau von Induktionskochfeldern bzw. Induktionsheizspulen. Zu dem Übertrager-Schwingkreis 13 gehören eigentlich noch die beiden Übertragerkondensatoren 21a und 21b, die ganz rechts im Schaltbild dargestellt sind.

Die Übertragerspule 15 soll auf einem flächigen Tragblech 18 aufliegen. Dieses besteht vorteilhaft aus Aluminium, wichtig ist, dass es elektrisch niederohmig ist. Alternative Werkstoffe sind Kupfer oder ggf. eine Silberlegierung. Das Tragblech 18, das auch aus der vorgenannten Offenlegungsschrift bekannt ist, weist zum einen eine Tragfunktion für die Übertragerspule 15 auf, möglicherweise auch noch für weitere Induktionsheizspulen des Induktionskochfelds in Form der Vorrichtung 11. Des Weiteren schirmt das Tragblech 18 darunterliegende elektronische und elektrische Bauteile gegen das Magnetfeld der darauf angeordneten Spulen ab. Schließlich kann das Tragblech 18 auch noch Wärmeleitfunktion und somit Kühlfunktion aufweisen sowie mit Öffnungen oder Aussparungen zur Befestigung oder für Kabeldurchführungen versehen sein.

Oberhalb der Übertragerspule 15 ist eben die Empfängerspule 25 des Empfänger-Schwingkreises 23 vorgesehen. Vorteilhaft wird sie in einem flachen Gehäuse oder als flaches Gerät auf eine Kochfeldplatte aufgelegt direkt oberhalb der Übertragerspule 15. Die Kochfeldplatte ist hier nicht dargestellt, aber leicht vorstellbar. Anstelle einer normalen Kochfeldplatte, die üblicherweise aus Glaskeramik besteht, kann es auch eine Tischplatte oder sonstige Ablageplatte sein mit einer vorgenannten Dicke und aus vorgenannten Materialien bestehend. Mit der Übertragerspule 15 kann auch wie mit einer normalen Induktionsheizspule gekocht werden mit induktivem Erwärmen eines darüber aufgestellten Kochgefäßes. In einem speziellen Betriebsverfahren kann eben auch eine induktive Energieübertragung erfolgen. Dabei kann die Empfängerspule 25 ähnlich ausgebildet sein wie die Übertragerspule 15, insbesondere in etwa die gleiche Größe bzw. Fläche und Form aufweisen. Auf ihrer Oberseite sind ebenso Ferrite 26 angeordnet und befestigt wie bei der Übertragerspule 15. Eine Schirmung ist auch oben im Empfänger denkbar, aber dort nicht zwingend. Der Empfänger-Schwingkreis 23 weist des Weiteren noch einen Empfängerkondensator 29 und eine Last 28 auf, an welche die induktive Energie letztlich übertragen werden soll bzw. die mit Energie versorgt werden soll. Diese Last 28 kann beispielsweise als ein Küchengerät in Form eines Standmixers, Wasserkochers odgl. vorliegen, die sozusagen oberhalb der Übertragerspule 15 auf die Abdeckung aufgestellt werden und die sozusagen kabellos mit Energie auf induktivem Weg versorgt werden. Da somit die Last 28 im Wesentlichen funktionieren soll wie ein sonstiger elektrischer Verbraucher entsprechend einem elektrischen Kleingerät oder einem elektrischem Küchengerät. Insofern sind der Übertrager-Schwingkreis 13 und der Empfänger-Schwingkreis 23 darauf auszulegen, des Weiteren ist eine Ansteuerung der Übertragerspule 15 auf entsprechendem Wege mit einer Frequenz von 50 Hz oder 60 Hz notwendig. Insofern entspricht die einhüllende Kurve des Übertragerstroms, die im Folgenden näher erläutert wird, dieser Frequenz von 50 Hz oder 60 Hz.

Zur Ansteuerung der Übertragerspule 15 weist der Übertrager-Schwingkreis 13 ganz rechts unten einen ersten Übertragerkondensator 21a und darüber einen zweiten Übertragerkondensator 21b auf. Vor der Übertragerspule 15 kann ein Abgriff zur Erfassung des Übertragerstroms i_{HF} als Strom durch die Übertragerspule vorgesehen sein. Links daneben sind zwei Transistoren 31a und 31b vorgesehen zur Ansteuerung des Übertrager-Schwingkreises 13. Über einen Zwischenkreiskondensator 34 sind sie auf übliche Art und Weise an einen Gleichrichter 33 angeschlossen, der wiederum mit einem Netzanschluss 35 verbunden ist. Dort kann der normale Wechselstrom i_{AC} gemessen werden. Die Netzspannung U_{N} am Netzanschluss 35 gibt eben die Frequenz von 50 Hz vor. Ein gleichgerichteter Strom i_{DC} kann auch gemessen werden

Der Wechselrichter mit den Transistoren 31a und 31b betreibt den Übertrager-Schwingkreis 13 mit einer Frequenz von 25 kHz, diese kann aber auch höher oder niedriger liegen. Während im Kochbetrieb die Übertragerspule 15 als Induktionsheizspule zumindest im kurzzeitigen Betrieb als Boost-Betrieb Energie mit einer Leistung bis zu 3,7 kW übertragen kann, die dann passiv in ein aufgesetztes Kochgefäß eingekoppelt wird zu dessen Erwärmung, kann im Betrieb mit induktiver Energieübertragung vorteilhaft eine Leistung bis zu 2,4 kW dauerhaft übertragen werden. Dies ist eine aktive Energieübertragung, da auf der Abnehmerseite ja auch ein Schwingkreis angeordnet ist, nämlich der Empfänger-Schwingkreis 23.

In den Ferriten 16 kann im Betrieb der induktiven Energieübertragung last- und betriebspunktabhängig eine Addition der magnetischen Flüsse von der Übertragerspule 15 und der Empfängerspule 25 auftreten. Dies kann dazu führen, dass die Ferrite 16 bei deutlich kleinerem Strom in der Übertragerspule 15 bereits in Sättigung kommen als dies üblicherweise beim induktiven Kochbetrieb auftreten würde, da der Phasenwinkel des Stroms in einem Kochgefäß nicht durch einen Resonanzkondensator verändert wird. Kommen diese Ferrite 16 in die Sättigung, dann induziert der sozusagen überschüssige magnetische Fluss, der von den Ferriten nicht mehr aufgenommen und nicht mehr geführt werden kann, Wirbelströme im metallischen Tragblech 18. Dies führt dazu, dass die wirksame Induktivität abnimmt, vor allem der Übertragerstrom i_{HF} bei unveränderter Ansteuerung aber ansteigt. Dadurch nimmt zum einen der Wirkungsgrad ab, was aus Energieeffizienzgründen ungewünscht ist. Zum anderen kann durch zu hohe Ströme eine ungewollte Überlast oder Wärmeentwicklung in der Ansteuerung des Übertrager-Schwingkreises 13 entstehen, insbesondere in den Transistoren 31a und 31b. Des Weiteren ist die Sättigung von Ferriten temperaturabhängig. Üblicherweise nimmt eine Sättigungsgrenze mit zunehmender Temperatur ab, unter Umständen sogar signifikant, so dass durch einen längeren Betrieb mit höherer Temperatur ebenfalls schneller eine Sättigung auftritt, die erfindungsgemäß vermieden werden soll. Dies macht es auch schwierig, mit vorgegebenen Stromgrenzen zu arbeiten, um eine Sättigung in den Ferriten 16 zu vermeiden. Dieses Problem der Sättigung haben die Erfinder im Rahmen der Erfindung erkannt, wenn eben mit einer Induktionsheizspule eines Induktionskochfelds induktiv Energie übertragen werden soll in einen sozusagen aktiven Abnehmer bzw. Empfänger wie den Empfänger-Schwingkreis 23. Des Weiteren ist diese Sättigung der Ferrite 16 eben auch dadurch ein Problem, dass bei einem Induktionskochfeld als Vorrichtung 11 ein Tragblech 18 darunter vorgesehen ist.

Die Regelung des Übertragerstroms derart, dass keine oder nur eine geringfügige Sättigung auftritt, kann nun auf unterschiedliche Arten realisiert werden. Es ist jeweils eine Art Sättigungsregelung.

In der Fig. 2 ist der Verlauf des Übertragerstroms i_{HF} durch die Übertragerspule 15 samt ihrer ersten Ableitung nach der Zeit im Netzspannungsmaximum dargestellt. Der Übertragerstrom i_{HF} selbst ist durchgezogen dargestellt, und die erste Ableitung ist strichliert dargestellt. Der geringfügige Anstieg der ersten Ableitung bei etwa 6 µs ist ein Zeichen dafür, dass eine einsetzende Sättigung bei den Ferriten vorliegt, der Übertragerstrom i_{HF} also wieder zunehmend ansteigt. Somit könnte eine Möglichkeit der Sättigungsregelung darin bestehen, den Verlauf des Übertragerstroms i_{HF} zu erfassen und die erste Ableitung davon zu bilden. Falls diese im Bereich zwischen einem Zehntel der Periodendauer des Übertragerstroms, also 4 µs, und einem Viertel der Periodendauer, also 10 µs, in einem eigentlich abfallenden Bereich kurzzeitig ansteigt, dann ist dies ein Anzeichen für beginnende Sättigung in den Ferriten 16. Dieser Anstieg sollte mindestens 1 µs lang dauern und/oder mindestens 5 % oder sogar mindestens 10 % der Signalhöhe zu diesem Zeitpunkt betragen. Liegen diese Bedingungen vor bzw. sind sie erfüllt, so kann eine einsetzende Sättigung in den Ferriten 16 erkannt werden und der Übertragerstrom i_{HF} kann reduziert werden, beispielsweise um 10 % oder 20 %. Dann sollte dieser kurzzeitige Anstieg der ersten Ableitung des Übertragerstroms i_{HF} nicht mehr auftreten, ansonsten müsste der Übertragerstrom i_{HF} weiter reduziert werden.

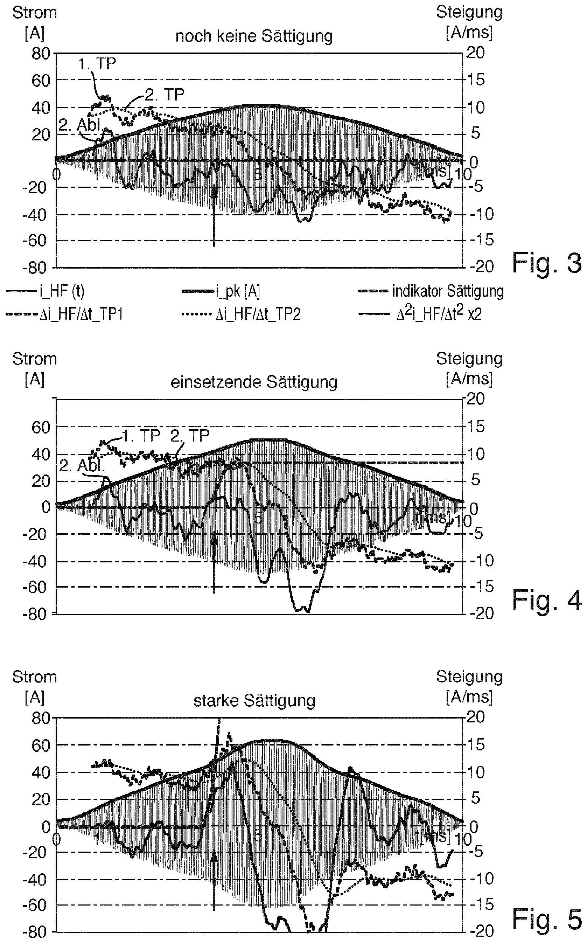

Die genannte Erfassung des Übertragerstroms i_{HF} selbst samt Bilden seiner ersten Ableitung ist messtechnisch aber nicht ganz einfach, vor allem hinsichtlich einer geforderten Genauigkeit und der hohen zeitlichen Auflösung. Deswegen kann bei einer eingangs genannten ersten Möglichkeit einer Sättigungsregelung die einhüllende Kurve der Spitzenwerte bzw. Maximalwerte des Übertragerstroms betrachtet werden, wie sie in den Fig. 3 bis 5 für jeweils noch keine Sättigung, einsetzende Sättigung und starke Sättigung dargestellt ist. Diese einhüllende Kurve verläuft nämlich entsprechend der Netzspannung U_{N} als Sinus mit einer Frequenz von 50 Hz.

In der Fig. 3 ist mit der dünnen durchgezogenen Linie die einhüllende Kurve der Spitzenwerte des Übertragerstroms i_{HF} dargestellt. Es liegt keine Sättigung vor, eine dicke gepunktete Linie als Indikator für die Sättigung liegt bei konstant null. Dünn dargestellt ist hier in zwei Varianten die erste Ableitung der einhüllenden Kurve, die hier nicht selbst direkt eingezeichnet ist. Gemäß der vorgenannten ersten Möglichkeit wird dieses Signal der ersten Ableitung durch zwei Tiefpässe mit deutlich unterschiedlichen Zeitkonstanten geglättet. Dünn strichpunktiert ist die Kurve der ersten Ableitung nach Glättung durch den ersten Tiefpass dargestellt. Dick durchgezogen dargestellt ist die Kurve der ersten Ableitung nach Glättung durch den zweiten Tiefpass. Die dünn strichpunktierte Kurve nach dem ersten Tiefpass mit einer relativ kleinen Zeitkonstante, vorteilhaft der doppelten Periodendauer der HF-Schwingung des Übertragerstroms selbst, ist gegenüber der ersten Ableitung an sich nicht sehr verändert. Die dick durchgezogene Kurve nach dem zweiten Tiefpass mit einer deutlich größeren Zeitkonstante, vorteilhaft der zehnfachen Periodendauer der HF-Schwingung, unter Umständen bis zur zwanzigfachen, ist also sozusagen deutlich langsamer bzw. geglättet. Dick gepunktet ist ein Indikator für die Sättigung dargestellt.

In Fig. 4 ist für eine einsetzende Sättigung in den Ferriten 16 dargestellt, wie das dünn strichlierte Signal nach dem zweiten Tiefpass im Zeitfenster zwischen 3 ms und 5 ms nach dem Nulldurchgang der einhüllenden Kurve des Übertragerstroms, das hier besonders beachtet wird, nicht mehr richtig abfällt. Dies ist bei etwa 3,6 ms zu erkennen, das Signal steigt hier sogar leicht an, an und die dünn strichpunktierte Kurve der ersten Ableitung mit dem ersten, schnellen Tiefpass durchbricht leicht die dünn strichlierte Kurve des langsameren, zweiten Tiefpasses. Des Weiteren durchstößt in diesem Zeitfenster die dick durchgezogene Kurve der zweiten Ableitung von unten kommend die x-Achse, was in der Fig. 3 auch noch nicht der Fall war. Auch aus diesem Grunde zeigt der dick gepunktete Verlauf des Indikators der Sättigung hier einen Anstieg. Bis zu diesem Betriebspunkt kann eine induktive Energieübertragung mittels der Vorrichtung 11 noch vorteilhaft betrieben werden, die Sättigung der Ferrite 16 ist noch relativ gering, und die dadurch entstehenden Verluste sind ebenfalls noch relativ gering.

In der Fig. 5 ist dann eine nochmals weiter angestiegene bzw. starke Sättigung dargestellt. Während zwischen Fig. 3 und Fig. 4 der maximale Stromwert der einhüllenden Kurve nur um knapp 10 A gestiegen ist, ist er nun in der Fig. 5 um etwas mehr als 20 A gestiegen. Des Weiteren ist zu erkennen, dass in dem vorgenannten Zeitfenster zwischen 3 ms und 5 ms der Verlauf der dünn strichpunktierten Kurve nach dem ersten Tiefpass stark angestiegen ist. Des Weiteren weist der dick durchgezogene Verlauf der zweiten Ableitung einen starken Anstieg auf. Ebenso steigt der dick gepunktete Indikator für die Sättigung extrem stark an und läuft oben aus dem Diagramm heraus. Der Punkt, an dem diese starke Sättigung erkannt worden ist, ist wie in Fig. 4 mit dem Pfeil bei etwa 3,8 ms angezeigt.

Des Weiteren ist aus der starken Sättigung der Fig. 5 zu ersehen, dass sich die dünn strichpunktierte Kurve nach dem ersten Tiefpass die dünn strichlierte Kurve nach dem zweiten Tiefpass bei etwa 3,5 ms nach oben durchstößt, also im genannten Zeitfenster, und für etwas mehr als 1 ms oberhalb davon verläuft bzw. größer ist. Auch dies kann als Indikator für diese starke Sättigung erkannt werden, wie zuvor erläutert worden ist.

Gemäß einer weiteren Möglichkeit einer Sättigungsregelung kann bei Betrachten der dünn strichlierten Kurve nach dem zweiten Tiefpass erkannt werden in dem vorgenannten Zeitfenster von 3 ms bis 5 ms nach einem Nulldurchgang der einhüllenden Kurve, dass diese Kurve nach dem zweiten Tiefpass noch einmal deutlich ansteigt, nämlich von etwa 6 A/ms auf 8 A/ms, also um deutlich mehr als die eingangs genannten 7 % bzw. 10 %. Die Dauer dieses Anstiegs beträgt etwas über 0,5 ms. Insbesondere liegt dieses Zeitfenster zwischen 3,5 ms und 4,1 ms.

Bei den beiden Kurven nach den beiden Tiefpässen ist es auch möglich, um ein Rauschen bei den gemessenen Signalen zu vermeiden bzw. zu unterdrücken, dass in dem genannten Zeitfenster von 3 ms bis 5 ms eine Differenz zwischen den beiden Signalen, also zwischen dem dünn strichpunktierten Verlauf nach dem ersten Tiefpass und dem dick strichpunktierten Verlauf nach dem zweiten Tiefpass, aufintegriert wird, solange der Verlauf nach dem ersten Tiefpass größer ist als der andere. So erhält man ein robustes Signal, mit dem die einsetzende Sättigung oder die bereits deutlich eingesetzte Sättigung erkannt werden kann. Es kann dagegengeregelt werden, und zwar ist dies dann jeweils immer auch unabhängig davon, wann genau die temperaturabhängige Sättigung in den Ferriten 16 auftritt.

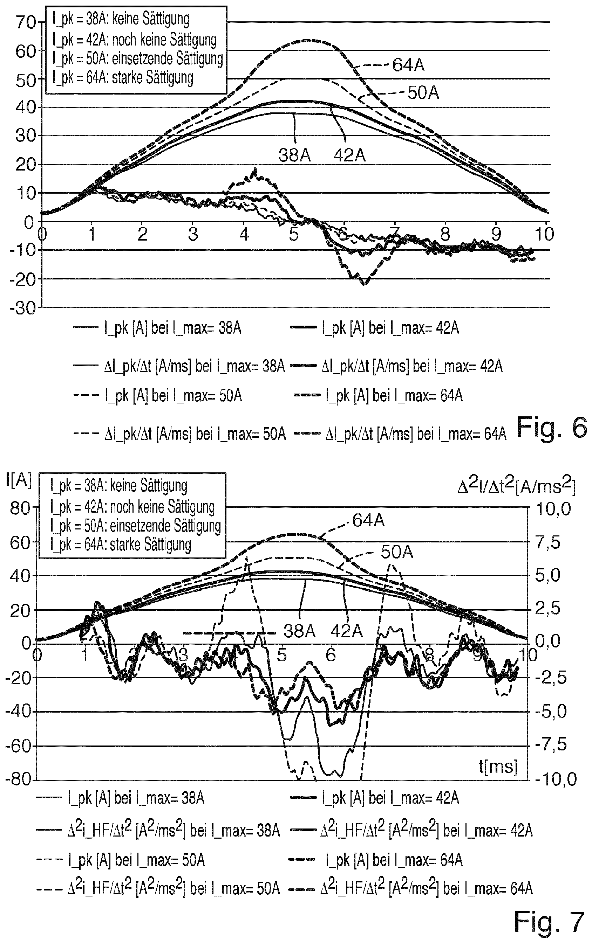

In der Fig. 6 ist für verschiedene Stromverläufe mit unterschiedlichen Spitzenströmen durch die Übertragerspule, nämlich jeweils maximal 38 A, 42 A, 50 A und 64 A, der Verlauf der einhüllenden Kurve der Spitzenwerte des Übertragerstroms dargestellt ähnlich wie in den Fig. 3 bis 5, und zwar von unten nach oben zunehmend. Sie sind jeweils durchgezogen dargestellt, da sie ja leicht zu unterscheiden sind. Die drei größeren Ströme entsprechen den Darstellungen der Fig. 3 bis 5.

Ähnlich wie zuvor beschrieben wird auch hier die erste Ableitung der einhüllenden Kurven gebildet, die jeweils dargestellt ist. Die erste Ableitung für den Spitzenstrom von 38 A ist dünn durchgezogen dargestellt, die erste Ableitung für den Spitzenstrom von 42 A ist dick durchgezogen dargestellt, die erste Ableitung für den Spitzenstrom von 50 A ist dünn strichliert dargestellt und die erste Ableitung für den Spitzenstrom von 64 A ist dick strichliert dargestellt. Aus der Fig. 6 ist zu ersehen, dass in dem vorgenannten Zeitfenster zwischen 3 ms und 5 ms nach dem Nulldurchgang der einhüllenden Kurve die erste Ableitung des Spitzenstroms von 50 A in etwa gleich bleibt bei kleinen Schwankungen. Bei einem Spitzenstrom von 64 A und einer starken Sättigung steigt die entsprechende dicke strichlierte Kurve deutlich an, während sie bei den beiden kleineren Spitzenströmen jeweils weiterhin abfällt.

In der Fig. 7 ist dann die jeweils noch zweite Ableitung dargestellt, und zwar auf dieselbe Art und Weise für die Verläufe mit unterschiedlichen Spitzenströmen wie für die erste Ableitung in Fig. 6. Hier ist zu erkennen, dass in dem dargestellten Zeitfenster zwischen 3 ms und 5 ms nach dem Nulldurchgang der einhüllenden Kurve die dünn strichlierte Kurve der zweiten Ableitung bei einem Spitzenstrom von 50 A den eingezeichneten Grenzwert von 1,0 A/ms² leicht übersteigt, und zwar zweimal. Auch dadurch können also die einsetzende Sättigung und somit ein guter Regelungspunkt erkannt werden. Des Weiteren ist hier in der Fig. 7 noch zu ersehen, dass die zweite Ableitung für den nächstkleineren Spitzenstrom von 42 A in diesem Zeitfenster deutlich unter diesem Grenzwert bleibt. Die dick strichlierte zweite Ableitung des Verlaufs bei einem Spitzenstrom von 64 A liegt um das Vielfache darüber. So kann auch die zusätzliche Bedingung ganz allgemein definiert werden, dass der Übertragerstrom so abgeregelt wird, dass die zweite Ableitung in diesem Zeitfenster zwischen 1,0 und 1,5 oder zwischen 1,0 und 2 A/ms² liegen soll.

Die nochmals weitere vorgenannte Möglichkeit der Aufnahme einer Referenzkurve für die einhüllende Kurve des Übertragerstroms mit deutlich unterhalb des Maximums liegender übertragener Energie und einem anschließenden Vergleich ist hier in den Figuren nicht dargestellt. Dies ist für den Fachmann aber leicht vorstellbar und realisierbar, weswegen auf eine separate Darstellung verzichtet werden kann. Die zuvor gegebene Beschreibung reicht hier zur Ausführung völlig aus.

## Patentansprüche

1. Verfahren zur induktiven Energieübertragung zwischen einer Übertragerspule (15) und einer Empfängerspule (25), insbesondere mittels induktiver Resonanz-Übertrager, wobei:
- die Übertragerspule (15) Teil eines Übertrager-Schwingkreises (13) ist,
- die Empfängerspule (25) Teil eines Empfänger-Schwingkreises (23) ist,
- die Energie von dem Übertrager-Schwingkreis (13) zu dem Empfänger-Schwingkreis (23) übertragen wird,
- das magnetische Feld in der Übertragerspule (15) und/oder der Empfängerspule (25) von Ferriten (16, 26) geführt wird, die auf der jeweils von der Gegenspule abgewandten Seite angeordnet sind,
- an der Übertragerspule (15) und/oder an der Empfängerspule (25) an einer von der jeweiligen Gegenspule abgewandten Seite Metallteile (18) angeordnet sind,
mit den Schritten:
- der Strom (i_{HF}) durch die Übertragerspule (15) wird überwacht,
- der Strom (i_{HF}) durch die Übertragerspule (15) wird derart abgeregelt oder begrenzt, dass er maximal 5% bis 10% über demjenigen Sättigungsstrom liegt, bei dem in den Ferriten (16, 26) Sättigung einsetzt, so dass die Ferrite im Bereich einer einsetzenden Sättigung sind oder in den Ferriten induzierte magnetische Flüsse ein mögliches Maximum erreichen, wobei dieses mögliche Maximum der Sättigung entspricht.

2. Verfahren nach Anspruch 1, **dadurch gekennzeichnet, dass** der Strom (i_{HF}) durch die Übertragerspule (15) auf maximal 2% über dem Sättigungsstrom begrenzt wird.

3. Verfahren nach Anspruch 1 oder 2, **dadurch gekennzeichnet, dass** es mit einer Induktionsheizspule (15) eines Induktionskochfelds (11) durchgeführt wird, insbesondere mit einer einzigen Induktionsheizspule.

4. Verfahren nach Anspruch 1 oder 2, **dadurch gekennzeichnet, dass** die Übertragerspule (15) und der Übertrager-Schwingkreis (13) unter einer Tischplatte angeordnet sind, vorzugsweise unter einer Tischplatte mit einer maximalen Dicke von 60 mm, insbesondere mit einer Dicke von 10 mm bis 50 mm.

5. Verfahren nach einem der vorhergehenden Ansprüche, **dadurch gekennzeichnet, dass** an der Übertragerspule (15) an einer von der Empfängerspule (25) abgewandten Seite ein flächiges Metallblech (18) als Metallteil angeordnet ist, vorzugsweise aus elektrisch gut leitfähigem Metall mit Aluminium- oder Kupferanteil, mit einer Fläche von mindestens 70% der Fläche dieser Übertragerspule (15), insbesondere mit mindestens der Fläche dieser Übertragerspule, vorzugsweise mit einem Abstand von maximal 50 mm, wobei insbesondere die Ferrite (16) zwischen Metallblech (18) und Übertragerspule (15) angeordnet sind.

6. Verfahren nach einem der vorhergehenden Ansprüche, **dadurch gekennzeichnet, dass** die Ferrite (16, 26) länglich ausgebildet sind, insbesondere auf einen geometrischen Mittelpunkt der Übertragerspule (15) weisend ausgerichtet sind, wobei vorzugsweise vier bis zehn Ferrite (16, 26) in gerader Stabform vorgesehen sind.

7. Verfahren nach einem der vorhergehenden Ansprüche, **dadurch gekennzeichnet, dass** ein Einsetzen der Sättigung der Ferrite (16, 26) dadurch erkannt wird, dass die erste Ableitung der einhüllenden Kurve des Stroms (i_{HF}) durch die Übertragerspule (15) oder des der Übertragerspule vom Netz zugeführten Stroms ermittelt wird, wobei diese erste Ableitung durch zwei Tiefpässe mit unterschiedlicher Zeitkonstante geglättet wird, wobei vorzugsweise eine Zeitkonstante des zweiten Tiefpasses das fünffache bis zwanzigfache einer Zeitkonstante des ersten Tiefpasses beträgt, insbesondere das zehnfache.

8. Verfahren nach Anspruch 7, **dadurch gekennzeichnet, dass** die Zeitkonstante des ersten Tiefpasses der 1,0-fachen bis fünffachen, vorzugsweise zweifachen, Periodendauer des Stroms (i_{HF}) durch die Übertragerspule (15) entspricht.

9. Verfahren nach Anspruch 7 oder 8, **dadurch gekennzeichnet, dass** ein Einsetzen der Sättigung der Ferrite (16, 26) dann erkannt wird, wenn das Signal nach dem ersten Tiefpass für eine Dauer von mindestens 0,3 ms, vorzugsweise mindestens 0,5 ms, nicht abfällt im Zeitfenster zwischen 2,5 ms und 5 ms nach dem Nulldurchgang der einhüllenden Kurve des Stroms (i_{HF}) durch die Übertragerspule (15), insbesondere wenn das Signal nach dem ersten Tiefpass ansteigt in diesem Zeitfenster.

10. Verfahren nach einem der Ansprüche 7 bis 9, **dadurch gekennzeichnet, dass** ein Einsetzen der Sättigung der Ferrite (16, 26) erkannt wird, wenn das Signal nach dem ersten Tiefpass das Signal nach dem zweiten Tiefpass durchbricht und mindestens 0,2 ms, insbesondere mindestens 0,5 ms, größer bleibt.

11. Verfahren nach einem der Ansprüche 1 bis 5, **dadurch gekennzeichnet, dass** die erste Ableitung der einhüllenden Kurve des Stroms (i_{HF}) durch die Übertragerspule (15) gebildet wird und eine einsetzende Sättigung dann erkannt wird, wenn sich in einem Zeitfenster von 2,5 ms bis 5 ms nach einem Nulldurchgang der einhüllenden Kurve des Stroms durch die Übertragerspule diese erste Ableitung konstant bleibt oder mindestens um 7% nach oben ansteigt während einer Zeitspanne von mindestens 0,3 ms, vorzugsweise von 0,5 ms bis 1 ms.

12. Verfahren nach Anspruch 11, **dadurch gekennzeichnet, dass** auch die zweite Ableitung der einhüllenden Kurve des Stroms (i_{HF}) durch die Übertragerspule (15) gebildet wird und eine einsetzende Sättigung dann erkannt wird, wenn in dem Zeitfenster zwischen 2,5 ms und 5 ms nach dem Nulldurchgang der einhüllenden Kurve des Stroms durch die Übertragerspule (15) die zweite Ableitung mindestens 1,0 A/ms² beträgt.

13. Verfahren nach einem der Ansprüche 1 bis 6, **dadurch gekennzeichnet, dass** in einem vorausgehenden Schritt eine Referenzkurve für die einhüllende Kurve des Stroms (i_{HF}) durch die Übertragerspule (15) aufgenommen wird, wobei dabei die übertragene Energie höchstens 50%, insbesondere genau 50%, der maximal übertragbaren Energie beträgt, wobei anschließend bei der Überwachung der Stroms durch die Übertragerspule dessen einhüllende Kurve mit der Referenzkurve verglichen wird, wobei dabei die beiden Kurvenverläufe normiert werden und eine einsetzende Sättigung dann erkannt wird, wenn die einhüllende Kurve des Stroms (i_{HF}) durch die Übertragerspule (15) mindestens 10%, vorzugsweise mindestens 20%, größer ist als die Referenzkurve.

14. Verfahren nach einem der Ansprüche 1 bis 6, **dadurch gekennzeichnet, dass** der Strom (i_{HF}) durch die Übertragerspule (15) überwacht wird und seine erste Ableitung nach der Zeit gebildet wird, wobei eine einsetzende Sättigung dann erkannt wird, wenn die erste Ableitung in einem Zeitfenster zwischen einem Zehntel der Periodendauer des Stroms durch die Übertragerspule und einem Viertel der Periodendauer in einem abfallenden Bereich kurzzeitig ansteigt, vorzugsweise für mindestens 1 µs und/oder um mindestens 10%, vorzugsweise mindestens 5%, der Signalhöhe zu diesem Zeitpunkt.

15. Vorrichtung (11) zur induktiven Energieübertragung zwischen einer Übertragerspule (15) und einer Empfängerspule (25), insbesondere mittels induktiver Resonanz-Übertrager, mit:
- einem Übertrager-Schwingkreis (13) mit einer Übertragerspule (15) zur Übertragung der Energie von dem Übertrager-Schwingkreis zu einem Empfänger-Schwingkreis (23) mittels Resonanz-Übertrager, wobei der Empfänger-Schwingkreis eine Empfängerspule (25) aufweist und an ihm eine mit Energie zu versorgende Last (28) hängt,
- Ferriten (16) an der von der Empfängerspule (25) abgewandten Seite der Übertragerspule (15), um das magnetische Feld in der Übertragerspule (15) zu führen,
- flächigen Metallteilen (18) an der Übertragerspule (15) unterhalb der Ferrite (16),
- Mitteln zum Überwachen des Stroms durch die Übertragerspule (15), **gekennzeichnet durch**
- Mittel zum Abregeln bzw. Begrenzen des Stroms (i_{HF}) durch die Übertragerspule (15) derart, dass er maximal 5% bis 10% über demjenigen Sättigungsstrom liegt, bei dem in den Ferriten (16) Sättigung einsetzt, so dass die Ferrite (16) im Bereich einer einsetzenden Sättigung sind oder in den Ferriten induzierte magnetische Flüsse ein mögliches Maximum erreichen, wobei dieses mögliche Maximum der Sättigung entspricht.

## Claims

1. Method for inductive energy transmission between a transmitter coil (15) and a receiver coil (25), in particular by means of inductive resonance transformers, wherein:
- the transmitter coil (15) is part of a transmitter oscillator circuit (13),
- the receiver coil (25) is part of a receiver oscillator circuit (23),
- the energy is transferred from the transmitter oscillator circuit (13) to the receiver oscillator circuit (23),
- the magnetic field in the transmitter coil (15) and/or the receiver coil (25) is guided by ferrites (16, 26), which are arranged on the side facing respectively away from the opposite coil,
- on the transmitter coil (15) and/or on the receiver coil (25), metal parts (18) are arranged on a side facing away from the respective opposite coil,
having the steps:
- the current (i_{HF}) through the transmitter coil (15) is monitored,
- the current (i_{HF}) through the transmitter coil (15) is curtailed or limited in such a way that the current is a maximum of 5 % to 10 % above that saturation current at which saturation begins in the ferrites (16, 26), such that the ferrites in the region of an onset of saturation or magnetic fluxes induced in the ferrites reach a possible maximum, wherein this possible maximum corresponds to the saturation.

2. Method according to claim 1, **characterized in that** the current (i_{HF}) through the transmitter coil (15) is limited to a maximum of 2 % above the saturation current.

3. Method according to claim 1 or 2, **characterized in that** it is implemented with an induction heating coil (15) of an induction hob (11), in particular with a single induction heating coil.

4. Method according to claim 1 or 2, **characterized in that** the induction heating coil (15) and the transmitter oscillator circuit (13) are arranged under a tabletop, preferably under a tabletop with a maximum thickness of 60 mm, in particular a thickness of 10 mm to 50 mm.

5. Method according to any of the preceding claims, **characterized in that** on the induction heating coil (15) on a side facing away from the receiver coil (25), a flat metal sheet (18) is arranged as a metal part, preferably made of metal with good electrical conductivity including a proportion of aluminium or copper, having a surface area of at least 70 % of the surface area of said transmitter coil (15), in particular with at least the surface area of said transmitter coil, preferably with a distance of at maximum 50 mm, wherein in particular the ferrites (16) are arranged between metal sheet (18) and transmitter coil (15).

6. Method according to any of the preceding claims, **characterized in that** the ferrites (16, 26) are designed to be elongate, in particular are oriented towards a geometric centre of the transmitter coil (15), wherein preferably four to ten ferrites (16, 26) are provided in a straight rod-shaped design.

7. Method according to any of the preceding claims, **characterized in that** an onset of the saturation of the ferrites (16, 26) is detected **in that** the first derivative of the envelope curve of the current (i_{HF}) through the transmitter coil (15) or of the current supplied to the transmitter coil from the power supply is determined, wherein said first derivative is smoothed by means of two low-pass filters with a different time constant, wherein preferably a time constant of the second low-pass is five times to twenty times a time constant of the first low-pass, in particular ten times.

8. Method according to claim 7, **characterized in that** the time constant of the first low-pass filter corresponds to 1.0 times to five times, preferably twice, the period duration of the current (i_{HF}) through the transmitter coil (15).

9. Method according to claim 7 or 8, **characterized in that** an onset of the saturation of the ferrites (16, 26) is detected when the signal following the first low-pass filter does not decrease for a period of at least 0.3 ms, preferably at least 0.5 ms, in the time window between 2.5 ms and 5 ms following the zero crossing of the envelope curve of the current (i_{HF}) through the transmitter coil (15), in particular when the signal increases following the first low-pass filter in said time window.

10. Method according to any of claims 7 to 9, **characterized in that** an onset of the saturation of the ferrites (16, 26) is detected when the signal following the first low-pass filter rises above the signal following the second low-pass filter and remains at least 0.2 ms, in particular at least 0.5 ms, greater than this signal following the second low-pass filter.

11. Method according to any of claims 1 to 5, **characterized in that** the first derivative of the envelope curve of the current (i_{HF}) through the transmitter coil (15) is formed and an onset of saturation is detected when, in a time window between 2.5 ms to 5 ms following a zero crossing of the envelope curve of the current through the transmitter coil, said first derivative remains constant or increases by at least 7 % during a time interval of at least 0.3 ms, preferably of 0.5 ms to 1 ms.

12. Method according to claim 11, **characterized in that** also the second derivative of the envelope curve of the current (i_{HF}) through the transmitter coil (15) is formed and an onset of saturation is detected when, in the time window between 2.5 ms and 5 ms following the zero crossing of the envelope curve of the current through the transmitter coil (15), the second derivative is at least 1.0 A/ms².

13. Method according to any of claims 1 to 6, **characterized in that**, in a preceding step, a reference curve is recorded for the envelope curve of the current (i_{HF}) through the transmitter coil (15), wherein the amount of energy transferred herein is at most 50 %, in particular exactly 50 %, of the maximum transferable energy, wherein subsequently during monitoring of the current through the transmitter coil the envelope curve thereof is compared to the reference curve, wherein the two curve profiles are herein normalized and an onset of saturation is detected when the envelope curve of the current (i_{HF}) through the transmitter coil (15) is at least 10 %, preferably at least 20 %, greater than the reference curve.

14. Method according to any of claims 1 to 6, **characterized in that** the current (i_{HF}) through the transmitter coil (15) is monitored and the first time derivative thereof is formed, wherein an onset of saturation is detected when the first derivative, in a time window between one tenth of the period duration of the current through the transmitter coil and one quarter of the period duration in a decreasing region, increases temporarily, preferably for at least 1 µs and/or by at least 10 %, preferably at least 5 %, of the signal level at this point in time.

15. Device (11) for inductive energy transmission between a transmitter coil (15) and a receiver coil (25), in particular by means of inductive resonance transformers, comprising:
- a transmitter oscillator circuit (13) having a transmitter coil (15) for transferring energy from the transmitter oscillator circuit to a receiver oscillator circuit (23) using resonance transformers, wherein the receiver oscillator circuit has a receiver coil (25) and a load (28) to be supplied with energy is connected thereto,
- ferrites (16) on the side of the transmitter coil (15) facing away from the receiver coil (25), in order to guide the magnetic field in the transmitter coil (15),
- flat metal parts (18) on the transmitter coil (15) underneath the ferrites (16),
- means for monitoring the current through the transmitter coil (15),
**characterized by**
- means for curtailing or limiting the current (i_{HF}) through the transmitter coil (15) such that the current is a maximum of 5 % to 10 % above that saturation current at which saturation begins in the ferrites (16), such that the ferrites (16) in the region of an onset of saturation or magnetic fluxes induced in the ferrites reach a possible maximum, wherein this possible maximum corresponds to the saturation.

## Revendications

1. Procédé de transmission inductive d'énergie entre une bobine de transmission (15) et une bobine de réception (25), en particulier par le biais de transmetteurs de résonance inductifs, dans lequel :
- la bobine de transmission (15) fait partie d'un circuit résonnant de transmission (13),
- la bobine de réception (25) fait partie d'un circuit résonnant de réception (23),
- l'énergie est transférée du circuit résonnant de transmission (13) au circuit résonnant de réception (23),
- le champ magnétique est guidé dans la bobine de transmission (15) et/ou la bobine de réception (25) par ferrites (16, 26) disposées sur le côté respectif détourné de la contre-bobine,
- sur la bobine de transmission (15) et/ou sur la bobine de réception (25) des pièces métalliques (18) sont disposées sur un côté détourné de la contre-bobine respective,
comprenant les étapes :
- surveiller le courant (i_{HF}) à travers la bobine de transmission (15),
- confiner ou limiter le courant (i_{HF}) à travers la bobine de transmission (15) de telle manière que ledit courant surpasse d'au maximum 5 % à 10 % le courant de saturation avec lequel une saturation dans les ferrites (16, 26) commence, de sorte que les ferrites sont dans la plage d'une saturation commençant ou flux magnétiques induits dans les ferrites atteignent un maximum possible, ledit maximum possible correspondant à la saturation.

2. Procédé selon la revendication 1, **caractérisé en ce que** le courant (i_{HF}) à travers la bobine de transmission (15) est limité à un maximum de 2 % au-dessus du courant de saturation.

3. Procédé selon la revendication 1 ou 2, **caractérisé en ce que** le procédé est effectué en utilisant une bobine de chauffage par induction (15) d'une table de cuisson à induction (11), en particulier utilisant une seule bobine de chauffage par induction.

4. Procédé selon la revendication 1 ou 2, **caractérisé en ce que** la bobine de transmission (15) et le circuit résonnant de transmission (13) sont disposés en-dessous d'une surface de table, de préférence en-dessous d'une surface de table d'une épaisseur maximale de 60 mm, en particulier d'une épaisseur de 10 mm à 50 mm.

5. Procédé selon l'une quelconque des revendications précédentes, **caractérisé en ce que** sur la bobine de transmission (15) à un coté détourné de la bobine de réception (25) une tôle métallique plate (18) est disposée en tant que pièce métallique, de préférence en métal de bonne conductivité électrique avec une teneur en aluminium ou en cuivre, présentant une superficie d'au moins 70 % de la superficie de ladite bobine de transmission (15), en particulier présentant au moins la superficie de ladite bobine de transmission, de préférence à une distance d'au maximum 50 mm, en particulier les ferrites (16) étant disposées entre tôle métallique (18) et bobine de transmission (15).

6. Procédé selon l'une quelconque des revendications précédentes, **caractérisé en ce que** les ferrites (16, 26) sont sous forme allongée, en particulier orientées vers un point central géométrique de la bobine de transmission (15), dans lequel de préférence quatre à dix ferrites (16, 26) sont agencées sous forme de barre rectiligne.

7. Procédé selon l'une quelconque des revendications précédentes, **caractérisé en ce qu'**un commencement de la saturation des ferrites (16, 26) est détecté **en ce que** la dérivée première de la courbe enveloppe du courant (i_{HF}) à travers la bobine de transmission (15) ou du courant alimenté à la bobine de transmission par le réseau est déterminée, dans lequel ladite dérivée première est lissée par deux filtres passe-bas de constante de temps différente, dans lequel de préférence une constante de temps du deuxième filtre passe-bas est cinq fois à vingt fois d'une constante de temps du premier filtre passe-bas, en particulier dix fois.

8. Procédé selon la revendication 7, **caractérisé en ce que** la constante de temps du premier filtre passe-bas correspond à 1.0 fois à cinq fois, de préférence deux fois, la durée des périodes du courant (i_{HF}) à travers la bobine de transmission (15).

9. Procédé selon la revendication 7 ou 8, **caractérisé en ce qu'**un commencement de la saturation des ferrites (16, 26) est détecté en cas que le signal après le premier filtre passe-bas pour une durée d'au moins 0,3 ms, de préférence au moins 0,5 ms, ne baisse pas dans un créneau entre 2,5 ms et 5 ms après le passage par zero de la courbe enveloppe du courant (i_{HF}) à travers la bobine de transmission (15), en particulier en cas que le signal après le premier filtre passe-bas augmente dans ce créneau.

10. Procédé selon l'une quelconque des revendications 7 à 9, **caractérisé en ce qu'**un commencement de la saturation des ferrites (16, 26) est détecté en cas que le signal après le premier filtre passe-bas franchit le signal après le deuxième filtre passe-bas et reste supérieur pendant au moins 0,2 ms, en particulier au moins 0,5 ms.

11. Procédé selon l'une quelconque des revendications 1 à 5, **caractérisé en ce que** la dérivée première de la courbe enveloppe du courant (i_{HF}) à travers la bobine de transmission (15) est formée et une saturation commençant est détecté en cas que, dans un créneau de 2,5 ms à 5 ms après un passage par zero de la courbe enveloppe du courant à travers la bobine de transmission, ladite dérivée première reste constante ou augmente d'au moins 7 % pendant un intervalle de temps d'au moins 0,3 ms, de préférence de 0,5 ms à 1 ms.

12. Procédé selon la revendication 11, **caractérisé en ce que** aussi la dérivée seconde de la courbe enveloppe du courant (i_{HF}) à travers la bobine de transmission (15) est formée et une saturation commençant est détecté en cas que, dans un créneau entre 2,5 ms et 5 ms après un passage par zero de la courbe enveloppe du courant à travers la bobine de transmission (15), ladite dérivée seconde est au moins 1,0 A/ms².

13. Procédé selon l'une quelconque des revendications 1 à 6, **caractérisé en ce que**, dans une étape précédente, une courbe de référence est enregistrée pour la courbe enveloppe du courant (i_{HF}) à travers la bobine de transmission (15), dans lequel en ce cas l'énergie transmise est au plus 50 %, en particulier exactement 50 %, de l'énergie maximale transmissible, dans lequel ensuite lors de la surveillance du courant à travers la bobine de transmission sa courbe enveloppe est comparée à la courbe de référence, dans lequel en ce cas les déroulements des deux courbes sont normalisés et une saturation commençant est détectée en cas que la courbe enveloppe du courant (i_{HF}) à travers la bobine de transmission (15) surpasse d'au moins 10 %, de préférence d'au moins 20 %, la courbe de référence.

14. Procédé selon l'une quelconque des revendications 1 à 6, **caractérisé en ce que** le courant (i_{HF}) à travers la bobine de transmission (15) est surveillé et sa dérivée première au temps est formée, dans lequel une saturation commençant est détectée en cas que la dérivée première dans un créneau entre un dixième de la durée des périodes du courant à travers la bobine de transmission et un quart de la durée des périodes dans une plage baissant augmente brièvement, de préférence pour au moins 1 µs et/ou d'au moins 10 %, de préférence au moins 5 %, du niveau du signal à ce moment-là.

15. Dispositif (11) de transmission inductive d'énergie entre une bobine de transmission (15) et une bobine de réception (25), en particulier par le biais de transmetteurs de résonance inductifs, comprenant :
- un circuit résonnant de transmission (13) avec une bobine de transmission (15) pour la transmission d'énergie d'un circuit résonnant de transmission à un circuit résonnant de réception (23) par le biais de transmetteurs de résonance, le circuit résonnant de réception présentant une bobine de réception (25) et une charge (28) à alimenter d'énergie étant connectée audit circuit,
- ferrites (16) sur le côté de la bobine de transmission (15) détourné de la bobine de réception (25) pour guider le champ magnétique dans la bobine de transmission (15),
- pièces métalliques plates (18) sur la bobine de transmission (15) en-dessous des ferrites (16),
- moyens pour surveiller le courant à travers la bobine de transmission (15), **caractérisé par**
- moyens pour confiner ou limiter le courant (i_{HF}) à travers la bobine de transmission (15) de telle manière que ledit courant surpasse d'au maximum 5 % à 10 % le courant de saturation avec lequel une saturation dans les ferrites (16) commence, de sorte que les ferrites (16) sont dans la plage d'une saturation commençant ou flux magnétiques induits dans les ferrites atteignent un maximum possible, ledit maximum possible correspondant à la saturation.
